# EUROPEAN PATENT APPLICATION

(11) **EP 4 647 915 A1**
(43) Date of publication of application: **12.11.2025**
(21) Application number: 24813797.8
(22) Date of filing: 07.03.2024
(51) Int. Cl.: G06F 9/50

(54) **THREAD SCHEDULING METHOD AND APPARATUS**

(30) Priority: 29.05.2023 CN 202310623835
(71) Applicant: Honor Device Co., Ltd., Shenzhen, Guangdong 518040 (CN)
(72) Inventor: CHEN, Chuanfu, Shenzhen, Guangdong 518040 (CN); XIN, Zhenwen, Shenzhen, Guangdong 518040 (CN); SUN, Wenyong, Shenzhen, Guangdong 518040 (CN)
(74) Representative: Goddar, Heinz J.
(86) International application number: PCT/CN2024/080655
(87) International publication number: WO 2024/244591

(57) **Abstract**

Embodiments of this application provide a thread scheduling method and apparatus. The method includes: At a first moment, in response to a first instruction, a terminal device changes, based on the first instruction, a processing priority of a second thread from a first priority to a second priority before executing a first work, where a processing priority of the second priority is higher than a processing priority of the first priority, the second thread carries a first identifier after the first moment, the first identifier indicates that the second thread is in a priority-elevated state, and the first instruction is an instruction corresponding to the first work; the terminal device executes the first work based on the second thread having the second priority; and at a second moment, when the terminal device determines that there is no to-be-executed work in the second thread, and the second thread carries the first identifier, the terminal device skips restoring the processing priority of the second thread. In this way, the terminal device can delay restoration of the processing priority of the second thread, to reduce an occurrence of the second thread being in a runnable state.

## Description

This application claims priority to Chinese Patent Application No. 202310623835.1, filed with the China National Intellectual Property Administration on May 29, 2023 and entitled "THREAD SCHEDULING METHOD AND APPARATUS", which is incorporated herein by reference in its entirety.

### TECHNICAL FIELD

This application relates to the field of terminal technologies, and in particular, to a thread scheduling method and apparatus.

### BACKGROUND

With development of terminal technologies, terminal devices have become an important tool in people's lives. The terminal device needs to execute a plurality of works. For example, in a process of processing a work, the terminal device buffers work data of the work into a buffer area, and processes the work based on the work data in the buffer area. After completing processing the work, the terminal device releases the work data in the buffer area.

In the conventional technology, the terminal device releases the work data in the buffer area based on a binder thread; and the binder thread needs to wait to be scheduled before releasing the work data in the buffer area.

However, in the thread scheduling method, there is a case in which the binder thread cannot be scheduled in a timely manner, and consequently, the terminal device cannot process a new work in a timely manner.

### SUMMARY

Embodiments of this application provide a thread scheduling method and apparatus, so that a terminal device can delay restoration of a processing priority of a second thread, to reduce an occurrence of the second thread being in a runnable state.

According to a first aspect, an embodiment of this application provides a thread scheduling method, applied to a terminal device. A first process and a first thread are run in the terminal device, the first thread is a thread used to process a work, the first process includes a second thread, the second thread is a binder thread, and the second thread includes a first work. The method includes: At a first moment, in response to a first instruction, the terminal device changes, based on the first instruction, a processing priority of the second thread from a first priority to a second priority before executing the first work, where a processing priority of the second priority is higher than a processing priority of the first priority, the second thread carries a first identifier after the first moment, the first identifier indicates that the second thread is in a priority-elevated state, and the first instruction is an instruction corresponding to the first work; the terminal device executes the first work based on the second thread having the second priority; and at a second moment, when the terminal device determines that there is no to-be-executed work in the second thread, and the second thread carries the first identifier, the terminal device skips restoring the processing priority of the second thread. In this way, the terminal device can delay restoration of the processing priority of the second thread, to reduce an occurrence of the second thread being in a runnable state.

In a possible implementation, the second thread further includes a second work. After the second moment, the method further includes: At a third moment, in response to a second instruction, when the terminal device determines, based on the second instruction, to change the processing priority of the second thread from the first priority to the second priority, and the terminal device is at the second priority after the second moment, the terminal device skips restoring the processing priority of the second thread, and executes the second work based on the second thread having the second priority, where the second instruction is an instruction corresponding to the second work; or when the terminal device determines, based on the second instruction, not to change the processing priority of the second thread from the first priority to the second priority, and the terminal device is at the second priority after the second moment, the terminal device restores the second priority to the first priority, and executes the second work based on the second thread having the first priority.

It may be understood that, before a binder thread in the terminal device executes a next work, a binder driver may determine whether to restore a processing priority of the binder thread, so that a process of restoring the priority is delayed from an end of a current work to a start of the next work, to better resolve a long-term runnable problem caused by restoring the priority after the current work ends.

In a possible implementation, the second instruction includes one or more of the following: a binder communication number, an interface descriptor, or an asynchronous communication identifier. The binder communication number indicates a communication interface, the interface descriptor indicates a client and a server that perform communication, and the asynchronous communication identifier indicates a communication mode. That the terminal device determines, based on the second instruction, to change the processing priority of the second thread from the first priority to the second priority includes: When the second thread is determined based on the second instruction and the second thread meets a preset condition, the terminal device changes the processing priority of the second thread from the first priority to the second priority. The preset condition includes one or more of the following: The communication interface indicated by the binder communication number is a communication interface between the first thread and the second thread, the client that is indicated by the interface descriptor and that performs communication is the first thread and the server that is indicated by the interface descriptor and that performs communication is the second thread, or the asynchronous communication identifier indicates that the first thread and the second thread are in asynchronous binder communication. In this way, the terminal device can accurately identify a fixed binder call, and the terminal device can improve accuracy of performing priority processing on the binder thread.

In a possible implementation, a third thread is run in the terminal device after the first moment and before the third moment, the third thread is a thread of a binder call initiated by the second thread, and the third thread includes a fourth work. The method further includes: The terminal device inserts a third work into an execution queue of the second thread based on the third thread; in response to a third instruction, when the terminal device determines, based on the third instruction, to restore the processing priority of the second thread, and the third work meets a preset first work type, the terminal device skips restoring the processing priority of the second thread, where the third instruction is an instruction corresponding to the third work; the terminal device executes the third work based on the second thread having the second priority; and the terminal device executes the fourth work. In this way, before the work is executed, the binder driver in the terminal device may determine, based on S703 and S704, a processing priority of the binder call, and filter out a preset work that causes the priority of the binder thread to be restored in advance, to reduce an occurrence of the binder thread being in a runnable state.

In a possible implementation, the first work type includes a work type indicating that a communication transaction is completed and handed over to an initiator for processing, and/or a work type indicating that a communication transaction fails and is handed over to the initiator for processing.

In a possible implementation, a fourth thread is run in the terminal device after the first moment and before the third moment, the fourth thread is a thread of a synchronous binder call initiated by the second thread, and the fourth thread includes a fifth work. The method further includes: The terminal device inserts a sixth work into the second thread after executing the fifth work, where the sixth work indicates that the terminal device completes processing the fifth work; in response to a fourth instruction, when the terminal device determines, based on the fourth instruction, to restore the processing priority of the second thread, and the sixth work meets a preset second work type, the terminal device skips restoring the processing priority of the second thread, where the fourth instruction is an instruction corresponding to the sixth work; the terminal device executes the sixth work based on the second thread having the second priority; and the terminal device executes the fifth work. In this way, before the work is executed, the binder driver in the terminal device may determine, based on S703 and S704, a processing priority of the binder call, and filter out a preset work that causes the priority of the binder thread to be restored in advance, to reduce an occurrence of the binder thread being in a runnable state.

In a possible implementation, the second work type includes a work type replied by the server.

In a possible implementation, the first work is a work identified by the terminal device when there is an asynchronous binder call, the second thread further includes a seventh work, the seventh work is a work identified by the terminal device when there is a synchronous binder call, the second thread carries a second identifier before the second moment, and the second identifier indicates that the second thread is an asynchronous binder call. Before the second moment and after the first moment, the method further includes: At a fourth moment, in response to a fifth instruction, when the terminal device detects the seventh work and the second thread that carries the second identifier, the terminal device restores the processing priority of the second thread before executing the seventh work, where the fifth instruction is an instruction corresponding to the seventh work; and at a fifth moment, the terminal device changes the processing priority of the second thread from the first priority to the second priority, and processes the seventh work based on the second priority, where the fifth moment is after the fourth moment, the second thread is in a state of the synchronous binder call in a first time period after the fifth moment, and the second thread is in a state of the asynchronous binder call between the fourth moment and the fifth moment. In this way, when the terminal device detects a conflict between a work identified by a synchronous binder and a work identified by an asynchronous binder, a processing priority of an asynchronous call is first restored, and then a processing priority of a synchronous call is elevated. It may be understood that, in a period of time after the binder driver elevates the processing priority of the synchronous call of the binder thread, the binder thread follows a synchronous binder call solution.

In a possible implementation, after the fifth moment, the method further includes: At a sixth moment, the terminal device restores the processing priority of the second thread, where the processing priority of the second thread is at the first priority in a second time period after the sixth moment.

In a possible implementation, the first thread is a thread for image synthesis, and the first process is a process for image drawing; or the first process is a process used to generate window data of window information, and the first thread is a thread used to update window information of a system.

According to a second aspect, an embodiment of this application provides a thread scheduling apparatus. A first process and a first thread are run in the apparatus, the first thread is a thread used to process a work, the first process includes a second thread, the second thread is a binder thread, and the second thread includes a first work. At a first moment, in response to a first instruction, a processing unit is configured to change, based on the first instruction, a processing priority of the second thread from a first priority to a second priority before executing the first work, where a processing priority of the second priority is higher than a processing priority of the first priority, the second thread carries a first identifier after the first moment, the first identifier indicates that the second thread is in a priority-elevated state, and the first instruction is an instruction corresponding to the first work; an execution unit is further configured to execute the first work based on the second thread having the second priority; and at a second moment, when a terminal device determines that there is no to-be-executed work in the second thread, and the second thread carries the first identifier, the processing unit does not restore the processing priority of the second thread.

According to a third aspect, an embodiment of this application provides a terminal device, including a processor and a memory. The memory is configured to store a computer program. The processor is configured to invoke and execute the computer program, so that the terminal device performs the method according to any one of the first aspect and the possible implementations of the first aspect.

According to a fourth aspect, an embodiment of this application provides a computer-readable storage medium, configured to store a computer program. When the computer program is run on a computer, the computer is enabled to perform the method according to any one of the first aspect and the possible implementations of the first aspect.

According to a fifth aspect, this application provides a computer program product. When the computer program product runs on a computer, the computer is enabled to perform the method according to any one of the first aspect and the possible implementations of the first aspect.

It can be understood that for beneficial effects in the second aspect to the fifth aspect, reference may be made to the beneficial effects in any one of the first aspect and the possible implementations of the first aspect. Details are not repeated herein.

### BRIEF DESCRIPTION OF THE DRAWINGS

FIG. 1 is a diagram of a hardware structure of a terminal device according to an embodiment of this application;
FIG. 2 is a diagram of a software structure of a terminal device according to an embodiment of this application;
FIG. 3 is a schematic flowchart for performing image display by a terminal device according to an embodiment of this application;
FIG. 4 is a schematic flowchart of an asynchronous binder call according to an embodiment of this application;
FIG. 5 is a schematic flowchart of a method for elevating a priority in an asynchronous binder call according to an embodiment of this application;
FIG. 6 is a diagram of viewing a thread status from a trace tool according to an embodiment of this application;
FIG. 7 is a schematic flowchart of a thread scheduling method according to an embodiment of this application;
FIG. 8 is another diagram of viewing a thread status from a trace tool according to an embodiment of this application;
FIG. 9 is still another diagram of viewing a thread status from a trace tool according to an embodiment of this application;
FIG. 10 is yet another diagram of viewing a thread status from a trace tool according to an embodiment of this application;
FIG. 11 is still yet another diagram of viewing a thread status from a trace tool according to an embodiment of this application;
FIG. 12 is a diagram of a scenario in which a synchronous call conflicts with an asynchronous call according to an embodiment of this application;
FIG. 13 is a further diagram of viewing a thread status from a trace tool according to an embodiment of this application;
FIG. 14 is a diagram 1 of an architecture of a thread scheduling method based on a terminal device according to an embodiment of this application;
FIG. 15 is a diagram 2 of an architecture of a thread scheduling method based on a terminal device according to an embodiment of this application;
FIG. 16 is a diagram of a structure of a thread scheduling apparatus according to an embodiment of this application; and
FIG. 17 is a diagram of another hardware structure of a terminal device according to an embodiment of this application.

### DESCRIPTION OF EMBODIMENTS

To clearly describe technical solutions in embodiments of this application, words such as "first" and "second" are used in embodiments of this application to distinguish between same items or similar items that have basically a same function or purpose. For example, a first value and a second value are merely intended to distinguish between different values, but not to limit a sequence of the values. A person skilled in the art may understand that the words such as "first" and "second" do not limit a quantity or an execution sequence, and the words such as "first" and "second" do not define a definite difference.

It should be noted that, in this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the words such as "example" or "for example" is intended to present a related concept in a specific manner.

In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

It should be noted that "when ..." in embodiments of this application may be an instantaneous occurrence time of a case, or may be a period of time after an occurrence of a case, and this is not specifically limited in embodiments of this application. In addition, a display interface provided in embodiments of this application is only used as an example, and the display interface may further include more or less content.

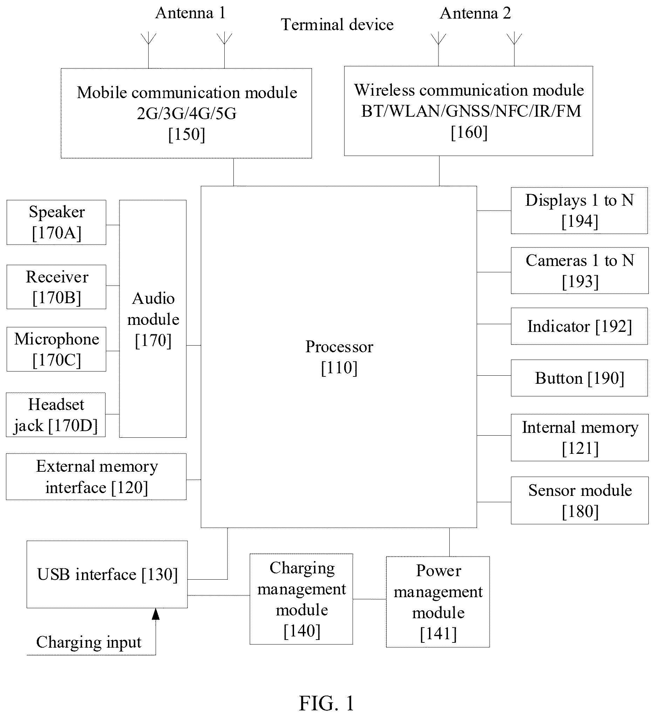

To better understand embodiments of this application, the following describes a structure of a terminal device in embodiments of this application. For example, FIG. 1 is a diagram of a hardware structure of a terminal device according to an embodiment of this application.

The terminal device may be referred to as a terminal (terminal), user equipment (user equipment, UE), a mobile station (mobile station, MS), a mobile terminal (mobile terminal, MT), or the like. For example, the terminal device may be a mobile phone (mobile phone), a smart television, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used by the terminal device are not limited in embodiments of this application.

As shown in FIG. 1, the terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a receiver 170B, a microphone 170C, a headset jack 170D, a sensor module 180, a button 190, an indicator 192, a camera 193, a display 194, and the like.

The sensor module 180 may include one or more of the following: for example, a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, or a bone conduction sensor.

It may be understood that the structure shown in embodiments of this application does not constitute a specific limitation on the terminal device. In some other embodiments of this application, the terminal device may include more or fewer components than those shown in the figure, or combine some components, or split some components, or have different component arrangements. The components shown in the figure may be implemented by hardware, software, or a combination of software and hardware.

The processor 110 may include one or more processing units. Different processing units may be independent devices, or may be integrated into one or more processors. A memory may be further disposed in the processor 110, and is configured to store instructions and data.

The USB interface 130 is an interface that complies with a USB standard specification, and may be specifically a Mini USB interface, a Micro USB interface, a USB Type-C interface, or the like. The USB interface 130 may be configured to connect to a charger to charge the terminal device, may be configured to transmit data between the terminal device and a peripheral device, or may be configured to connect to a headset, for audio playing through the headset. The interface may alternatively be configured to connect to another device, for example, an AR device.

The charging management module 140 is configured to receive a charging input from the charger. The charger may be a wireless charger, or may be a wired charger. The power management module 141 is configured to connect to the charging management module 140 and the processor 110.

A wireless communication function of the terminal device may be implemented through the antenna 1, the antenna 2, the mobile communication module 150, the wireless communication module 160, a baseband processor, and the like.

The antenna 1 and the antenna 2 are configured to transmit and receive electromagnetic wave signals. The antenna in the terminal device may be configured to cover one or more communication frequency bands. Different antennas may be further multiplexed to improve antenna utilization.

The mobile communication module 150 may provide a solution to wireless communication including 2G/3G/4G/5G and the like applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to a modem for demodulation.

The wireless communication module 160 may provide a solution to wireless communication including a wireless local area network (wirelesslocal area networks, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), and the like applied to the terminal device.

The modem may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to an application processor. The application processor outputs a sound signal through an audio device (which is not limited to a speaker, a receiver, or the like), or displays an image or a video through the display 194. In some embodiments, the modem may be an independent device. In some other embodiments, the modem may be independent of the processor 110, and is disposed in a same device as the mobile communication module 150 or another functional module.

The terminal device implements a display function through a GPU, the display 194, the application processor, and the like. The GPU is a microprocessor for image processing, and is connected to the display 194 and the application processor. The GPU is configured to perform mathematical and geometric computing for graphics rendering.

The display 194 is configured to display an image, a video, or the like. The display 194 includes a display panel. In some embodiments, the terminal device may include 1 or N displays 194, where N is a positive integer greater than 1.

The terminal device may implement a photographing function through an ISP, the camera 193, a video codec, the GPU, the display 194, the application processor, and the like.

The camera 193 is configured to capture a still image or a video. In some embodiments, the terminal device may include 1 or N cameras 193, where N is a positive integer greater than 1.

The external memory interface 120 may be configured to connect to an external storage card such as a Micro SD card, to extend a storage capability of the terminal device. The external storage card communicates with the processor 110 through the external memory interface 120, to implement a data storage function. For example, music, video, and other files are stored in the external storage card.

The internal memory 121 may be configured to store computer-executable program code, where the executable program code includes instructions. The internal memory 121 may include a program storage area and a data storage area.

The terminal device may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The terminal device may be used to listen to music or answer a call in a hands-free mode through the speaker 170A. The receiver 170B, also referred to as "earpiece", is configured to convert an electrical audio signal into a sound signal. When the terminal device is used to answer a call or receive voice information, the receiver 170B may be put close to a human ear to listen to a voice. The headset jack 170D is configured to connect to a wired headset. The microphone 170C, also referred to as a "mic" or a "mike", is configured to convert a sound signal into an electrical signal. In embodiments of this application, the terminal device may have one microphone 170C.

The button 190 includes a power on/off button, a volume button, or the like. The button 190 may be a mechanical button, or may be a touch button. The terminal device may receive a button input, and generate a button signal input related to user settings and function control of the terminal device. The indicator 192 may be an indicator light, may be configured to indicate a charging status or a power change, and may further be configured to indicate a message, a missed incoming call, a notification, and the like.

In addition, an operating system, for example, an iOS operating system, an Android (android) operating system, or a Windows operating system, is further run on the foregoing components of the device. An application may be installed and run on the operating system.

A software system of the terminal device may use a layered architecture, an event-driven architecture, a microkernel architecture, a microservice architecture, a cloud architecture, or the like. Details are not described herein. In embodiments of this application, an Android system of a layered architecture is used as an example to describe a software structure of the terminal device.

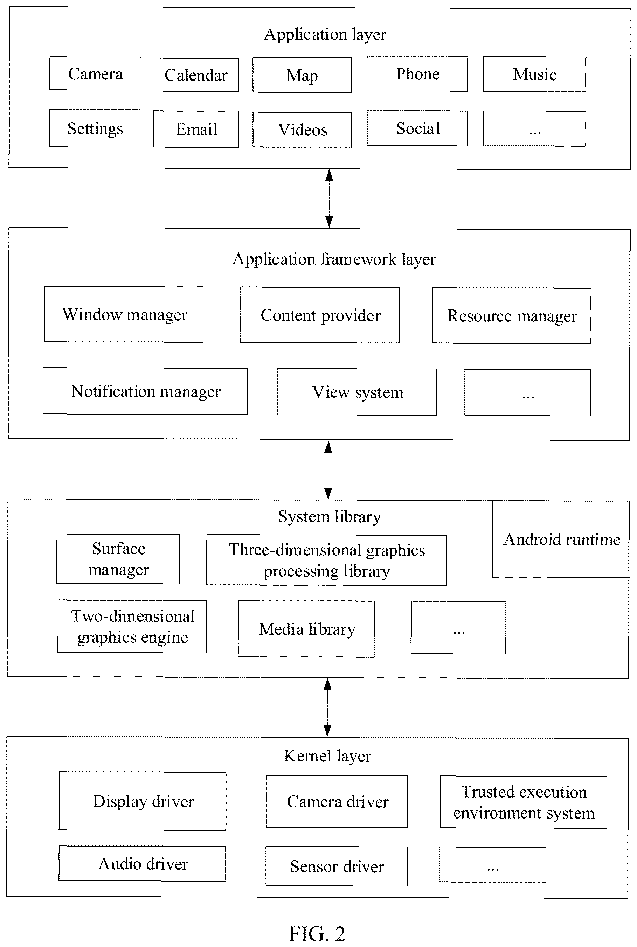

For example, FIG. 2 is a diagram of a software structure of a terminal device according to an embodiment of this application.

In the layered architecture, software is divided into several layers, and each layer has a clear role and task. The layers communicate with each other through software interfaces. In some embodiments, the Android system is divided into four layers, namely, an application layer, an application framework layer, an Android runtime (Android runtime) and a system library, and a kernel layer from top to bottom.

The application layer may include a series of application packages.

As shown in FIG. 2, the application package may include applications such as Camera, Calendar, Phone, Map, Phone, Music, Settings, Email, Videos, and Social.

The application framework layer provides an application programming interface (application programming interface, API) and a programming framework for an application at the application layer. The application framework layer includes some predefined functions.

As shown in FIG. 2, the application framework layer may include a window manager, a content provider, a resource manager, a view system, a notification manager, and the like.

The window manager is configured to manage a window program. The window manager may obtain a size of a display, determine whether there is a status bar, lock a screen, touch a screen, drag a screen, take a screenshot, and the like.

The content provider is configured to: store and obtain data, and enable the data to be accessed by an application. The data may include a video, an image, audio, calls that are made and answered, a browsing history and bookmarks, a phone book, and the like.

The view system includes visual controls such as a control for displaying a text and a control for displaying a picture. The view system may be configured to construct an application. A display interface may include one or more views. For example, a display interface including a Messages notification icon may include a view for displaying a text and a view for displaying a picture.

The resource manager provides various resources such as a localized character string, an icon, a picture, a layout file, and a video file for an application.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With reference to a scenario in which an application starts or interface switching occurs in the application, the following describes an example of a working procedure of software and hardware of the terminal device.

With reference to the accompanying drawings, the following describes in detail a thread scheduling process based on the application that is in the terminal device and that is provided in embodiments of this application. It should be noted that "when ..." in embodiments of this application may be an instantaneous occurrence time of a case, or may be a period of time after an occurrence of a case, and this is not specifically limited in embodiments of this application.

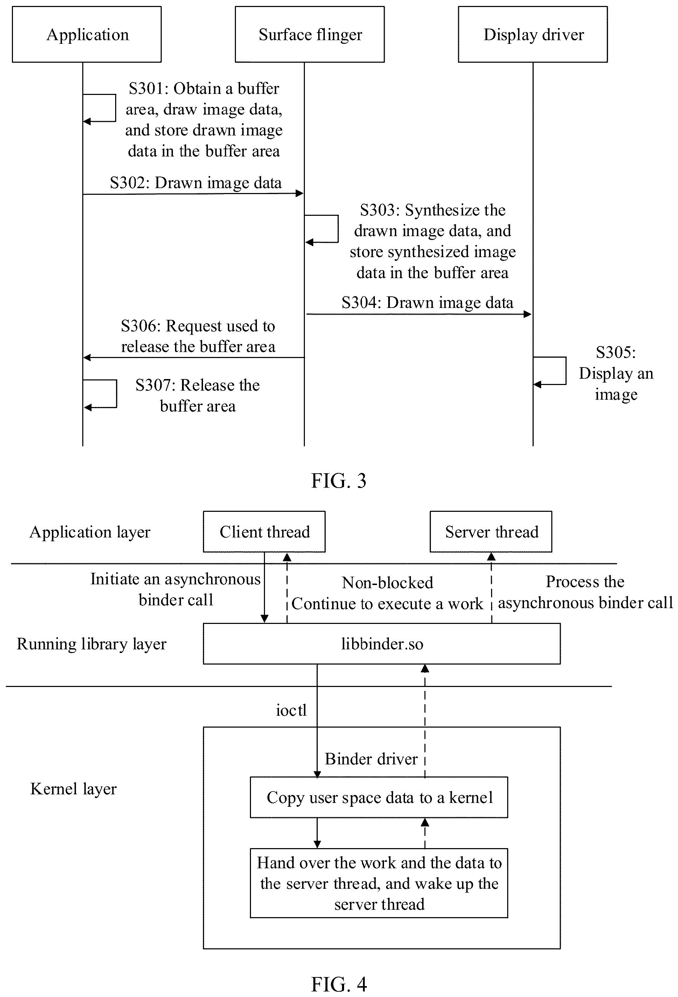

Generally, an interface displayed by the terminal device needs to depend on steps such as drawing rendering, synthesis, and display of the interface by each internal module. FIG. 3 is a schematic flowchart for performing image display by a terminal device according to an embodiment of this application. As shown in FIG. 3, the terminal device may include an application (application, APP), a surface flinger (surface flinger), a display driver, and the like.

Display of each frame of image in the terminal device requires three main steps: image drawing rendering by the APP, image synthesis by the surface flinger, and image display by the display driver. Alternatively, a process from image drawing to display may further include another step. This is not limited in this embodiment of this application.

S301: The APP may obtain a buffer area (buffer area), draw image data, and store drawn image data in the buffer area.

The APP may include a process (or referred to as a first process) used to implement image drawing rendering, and the first process is used to implement drawing rendering of the image data. For example, when the APP receives a trigger operation of a user, the APP may perform the step S301.

S302: The APP transfers the drawn image data to the surface flinger.

S303: The surface flinger performs image synthesis on the drawn image data, and stores synthesized image data in the buffer area.

It may be understood that, after S303, S304 and S306 may be executed synchronously or sequentially. This is not specifically limited in this embodiment of this application.

S304: The surface flinger transfers the synthesized image data to the display driver.

S305: The display driver displays an image.

S306: After transferring the synthesized image data to the display driver, the surface flinger may initiate, to the APP, a request used to release the buffer area.

S307: The APP releases the image data in the buffer area, so that the APP may subsequently buffer new image data into the buffer area, and implement processing and subsequent display of the new image data.

In a process in which the APP releases the image data in the buffer area in S306 and S307, the terminal device needs to call a binder thread (or referred to as a second thread) that is in the APP and that is used to release the buffer area for processing, and a binder thread needs to be called between the surface flinger and the APP by using a binder driver in a kernal kernel. For a specific process of an asynchronous binder call, refer to an embodiment corresponding to FIG. 4.

FIG. 4 is a schematic flowchart of an asynchronous binder call according to an embodiment of this application.

The asynchronous binder call process may relate to a client thread, a server thread, a binder driver at a kernel layer, and libbinder.so at a native layer. The client thread may be a surface flinger thread (or referred to as a first thread) in the surface flinger, and the server thread may be a binder process (or referred to as a second thread) in the APP.

A specific implementation of the process in S306 and S307 may be as follows: The surface flinger thread sends, to libbinder.so at the running library layer (or referred to as the native layer), the request used to release the buffer area. The request used to release the buffer area may be used to initiate the asynchronous binder call. The native layer may deliver the asynchronous binder call to the binder driver by using an ioctl command. The binder driver copies user space data transmitted in the ioctl command, parses a work in the binder asynchronous call and the binder thread in the binder asynchronous call, wakes up the binder thread of a server, and delivers the asynchronous binder call to the binder thread by using libbinder.so at the native layer. The binder thread releases the image data in the buffer area. In a non-blocked state, the client thread and the server thread may continue to perform, based on the asynchronous binder call, the step of releasing the image data in the buffer area.

It may be understood that, after each frame is drawn, the terminal device performs the asynchronous binder call process, and releases, by using the binder thread, image data corresponding to the frame of image in the buffer area. The binder thread usually corresponds to a processing priority. When the processing priority of the binder thread is low, and the terminal device is in a high-load scenario, an execution sequence of another thread whose priority is higher than the processing priority of the binder thread is higher than an execution sequence of the binder thread. As a result, the binder thread takes longer time to release the buffer area, and is in a waiting state (or referred to as a runnable state) for a long period of time when waiting for releasing the buffer area. This further affects subsequent drawing, synthesis, and display processes of image frames, leading to picture freezing on the terminal device. The runnable state means a state in which a thread is runnable but needs to continue to wait for CPU scheduling.

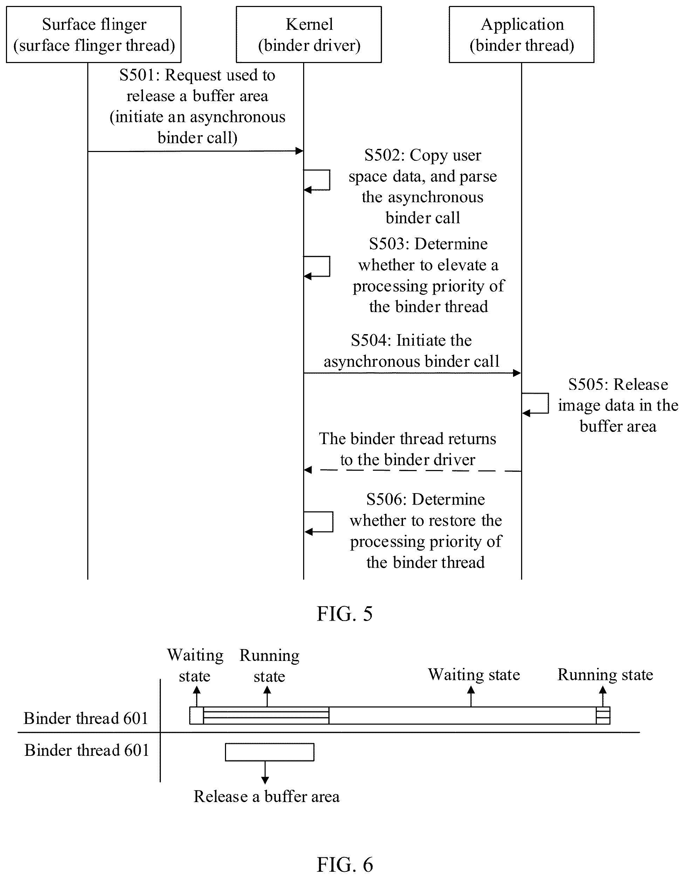

Therefore, to resolve a problem that picture freezing occurs on the terminal device because the processing priority of the binder thread is low, an embodiment of this application may provide a method for elevating a priority in an asynchronous binder call (refer to an embodiment corresponding to FIG. 5), so that the terminal device can accurately identify a binder thread that is in an APP and that is used to release a buffer area, and elevate a processing priority of the binder thread. In this way, the binder thread can process a work at a high priority, to improve subsequent picture freezing issues.

For example, FIG. 5 is a schematic flowchart of a method for elevating a priority in an asynchronous binder call according to an embodiment of this application.

S501: A surface flinger thread sends, to a binder driver, a request used to release a buffer area, where the request used to release the buffer area is an asynchronous binder call.

The asynchronous binder call may be a binder_ioctl command, and the request used to release the buffer area carries one or more of the following information: an asynchronous communication identifier, a binder communication number, an interface descriptor, or the like. The asynchronous communication identifier indicates that a binder call is an asynchronous call, the binder communication number indicates a communication interface, and the interface descriptor indicates a client and a server that perform communication.

S502: The binder driver copies user space data, and parses the asynchronous Binder call.

S503: The binder driver determines whether to elevate a processing priority of a binder thread.

When the asynchronous binder call meets a preset condition, the binder driver changes the processing priority of the binder thread from a first priority to a second priority; or when the asynchronous binder call does not meet a preset condition, the binder driver maintains a first priority. The second priority is higher than the first priority. The binder driver may determine, based on the information carried in the request used to release the butter area, whether to change the processing priority of the binder thread.

For example, the preset condition includes one or more of the following: The communication interface indicated by the binder communication number is a communication interface between the surface flinger thread and the binder thread, the client that is indicated by the interface descriptor and that performs communication is the surface flinger thread and the server that is indicated by the interface descriptor and that performs communication is the binder thread, or the asynchronous communication identifier indicates that the surface flinger thread and the binder thread are in asynchronous binder communication.

In an implementation, if it is determined that the communication interface indicated by the binder communication number is the communication interface between the surface flinger thread and the binder thread, and an initiator that is indicated by the interface descriptor and that performs communication is the surface flinger thread and a processing end that is indicated by the interface descriptor and that performs communication is a first process, the processing priority of the binder thread is changed from the first priority to the second priority.

In another implementation, if it is determined that the communication interface indicated by the binder communication number is the communication interface between the surface flinger thread and the binder thread, an initiator that is indicated by the interface descriptor and that performs communication is the surface flinger thread and a processing end that is indicated by the interface descriptor and that performs communication is a first process, and the asynchronous communication identifier indicates that the surface flinger thread and the first process are in asynchronous binder communication, the processing priority of the binder thread is changed from the first priority to the second priority.

Further, the binder driver may wake up a binder after changing the priority of the binder thread, and then perform the step S504.

S504: The binder driver initiates the asynchronous binder call to the binder thread.

S505: The binder thread releases image data in the buffer area.

After the binder thread releases the image data in the buffer area, the binder thread may return to the binder driver (as shown by a dotted line after S505), so that the binder driver performs the subsequent step S506.

S506: The binder driver determines whether to restore the processing priority of the binder thread.

For example, when the binder thread is in an idle state, the binder driver restores the processing priority of the binder thread, so that the processing priority of the binder thread is restored from the second priority to the first priority. Alternatively, when the binder thread is not in an idle state, the binder driver does not restore the processing priority of the binder thread. In this case, the processing priority of the binder thread is still at the second priority.

That the binder thread is in an idle state may be understood as there is no work (work) to be executed in the binder thread, and that the binder thread is not in an idle state may be understood as there is a work to be executed in the binder thread.

Based on the solution of elevating the processing priority of the binder thread in the embodiment corresponding to FIG. 5, the binder driver may accurately identify the binder thread used to release the buffer area in S503. In addition, before the binder thread is woken up, the processing priority of the binder thread is elevated, so that the binder thread can be run at a high priority. In addition, after the binder thread completes running a current work in a queue, the binder driver determines whether the binder thread is currently in an idle state, restores the processing priority of the binder thread when the binder thread is in the idle state, and does not restore the processing priority of the binder thread when the binder thread is not in the idle state.

However, the following problems exist in the embodiment corresponding to FIG. 5.

Problem 1: In S506, when the binder thread is not in the idle state, the binder driver does not restore the processing priority of the binder thread, so that the binder thread is at the high priority. However, when the binder thread processes a work in the queue, an important resource in a terminal device may be occupied based on the high priority. As a result, a device resource available to another thread is low, and a running capability of the another thread is affected.

Problem 2: In S506, when the binder thread is in the idle state, the binder driver restores the processing priority of the binder thread, so that the binder thread is at a low priority. However, another high-priority thread run in the terminal device preempts a CPU, so that the binder thread switches from a running (running) state to a runnable state. When a load of the terminal device is high, duration in the runnable state is long, which affects subsequent running of the binder thread.

For the problem 2, FIG. 6 is a diagram of viewing a thread status from a trace tool according to an embodiment of this application. The trace tool may be understood as a tool for viewing a running state of each process (or thread) in the CPU of the terminal device. A horizontal direction in the trace tool may be understood as a time axis.

As shown in a first row in FIG. 6, a binder thread 601 may be in a running state or a runnable state in different time periods. As shown in a second row in FIG. 6, specifically, the binder thread 601 in the running state may execute a work of releasing image data in a buffer area.

It may be understood that because the binder thread 601 is in an idle state, the binder driver may restore a priority to the binder thread 601. However, another high-priority thread in the terminal device preempts the CPU. As a result, the binder thread 601 may be in the runnable state for a period of time after the work is executed.

A time period of being in the runnable state before the running state may be understood as a time period in which the binder thread 601 is queuing to wait for CPU scheduling, and a time period of being in the running state after a last runnable state may be understood as a time period in which the binder thread 601 is completing cleanup work.

In a possible implementation, FIG. 6 may also include another work running in the binder thread 601. This is not limited in this embodiment of this application.

In view of the problems described in the embodiment corresponding to FIG. 5, an embodiment of this application provides a thread scheduling method. After a binder thread completes executing a current work, a binder driver may not restore a priority of the binder thread when it is determined that the binder thread is in an idle state and the priority of the binder thread has been elevated before. In this way, restoration of the priority of the binder thread can be delayed, to reduce an occurrence of the binder thread being in a runnable state.

Further, before the binder thread executes a next work, the binder driver may determine whether to restore the processing priority of the binder thread, so that a process of restoring the priority is delayed from an end of the current work to a start of the next work, to better resolve a long-term runnable problem caused by restoring the priority after the current work ends.

The following describes the technical solutions of this application and how to resolve the foregoing technical problems according to the technical solutions of this application in detail by using specific embodiments. The following several specific embodiments may be implemented independently, or may be combined with each other. For a same or similar concept or process, details may be not described in some embodiments.

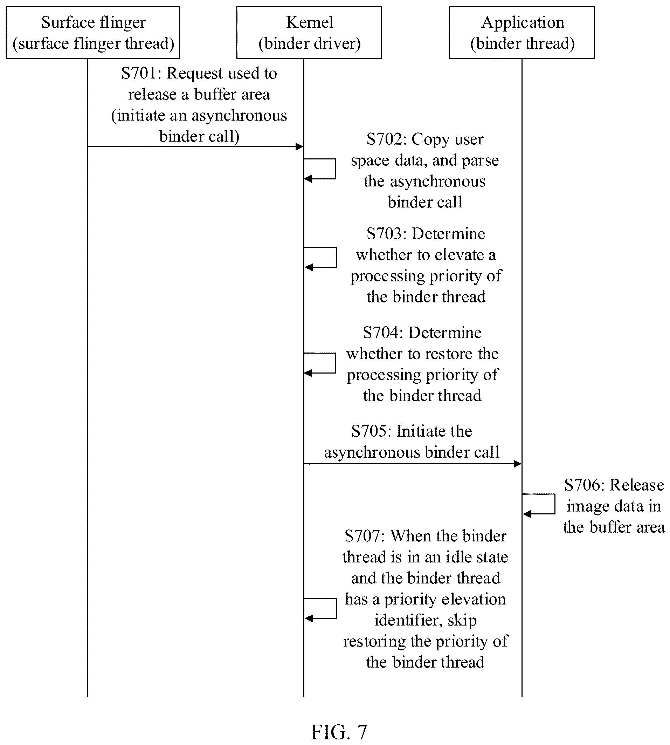

For example, FIG. 7 is a schematic flowchart of a thread scheduling method according to an embodiment of this application. As shown in FIG. 7, the thread scheduling method may include the following steps.

S701: A surface flinger thread sends, to a binder driver, a request used to release a buffer area, where the request used to release the buffer area is an asynchronous binder call.

S702: The binder driver copies user space data, and parses the asynchronous Binder call.

S703: The binder driver determines whether to elevate a processing priority of a binder thread.

When the binder driver determines to elevate the processing priority of the binder thread, the binder driver may add, for the binder thread, an identifier (or referred to as a first identifier) indicating to elevate a priority, where the identifier may be ture.

For descriptions in S701 to S703, refer to S501 to S503. Details are not described herein again.

S704: The binder driver determines whether to restore the processing priority of the binder thread.

When the binder thread is currently at a second priority, and the priority of the binder thread needs to be elevated to the second priority based on the determination in S703 (a work in the binder thread carries a label indicating that a priority needs to be elevated), the binder driver does not restore the processing priority of the binder thread, that is, the binder driver maintains the processing priority of the binder thread at the second priority.

Alternatively, when the binder thread is currently at a second priority, and the priority of the binder thread does not need to be elevated based on the determination in S703 (a work in the binder thread does not carry a label indicating to elevate a priority), the binder driver restores the priority of the binder thread, that is, changes the processing priority of the binder driver from the second priority to a first priority.

It may be understood that S703 may be a step performed by the surface flinger thread in the binder driver, and S704 may be a step performed by the binder thread after the binder driver wakes up the binder thread.

It may be understood that the binder driver may comprehensively determine, with reference to S703 and S704, how to process a processing priority of the asynchronous binder call. For example, when it is determined that the asynchronous binder call meets a preset condition, and the binder thread is at the second priority, the binder driver maintains the second priority of the binder thread; or when it is determined that the asynchronous binder call does not meet a preset condition, and the binder is at the second priority, the binder driver restores the priority of the binder thread to the first priority.

S705: The binder driver initiates the asynchronous binder call to the binder thread.

S706: The binder thread releases image data in the buffer area.

S707: When the binder thread is in an idle state, and the binder thread carries the identifier indicating to elevate the priority, the binder driver does not restore the priority of the binder thread, that is, the binder driver maintains the second priority of the binder thread.

Similarly, when the binder thread is not in the idle state, the binder driver does not restore the processing priority of the binder thread, so that the binder thread maintains the second priority. Therefore, after the binder thread can release the image data in the buffer area, the priority is not restored regardless of a current state of the binder thread, to achieve a purpose of delaying priority restoration.

In a possible implementation, after S707, a terminal device may determine, again based on the steps S701 to S704, the priority of the binder before a next work is executed.

With reference to the embodiment corresponding to FIG. 5 and the embodiment corresponding to FIG. 7, it may be understood that, in the embodiment corresponding to FIG. 5, the binder driver may restore the processing priority of the binder thread when the binder thread completes releasing the image data in the buffer area and the binder thread is in the idle state. This causes a problem that the binder thread is in the runnable state.

However, in the embodiment corresponding to FIG. 7, the binder driver may temporarily not restore the processing priority of the binder thread when the binder thread completes releasing the image data in the buffer area and the binder thread is in the idle state, so that determining of restoring the priority is delayed until the binder thread processes a next work. This reduces an occurrence of the binder being in the runnable state due to restoration of the priority, and ensures that a work of releasing the buffer area can be run at a high priority.

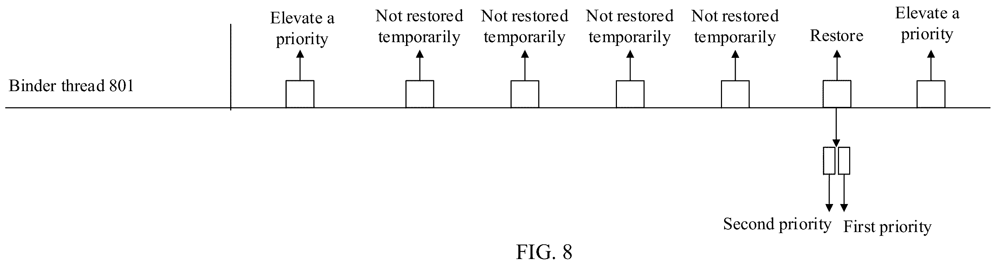

For example, FIG. 8 is another diagram of viewing a thread status from a trace tool according to an embodiment of this application. As shown in FIG. 8, a priority of a binder thread 801 may be elevated before a 1^{st} work is executed, and the processing priority of the binder thread 801 is not restored after the 1^{st} work ends. When the binder thread 801 executes a 2^{nd} work, the binder driver determines, based on S703, whether the priority needs to be elevated and determines, based on S704, whether the priority needs to be restored. For example, the binder driver may determine that the priority does not need to be elevated before the binder thread 801 executes the 2^{nd} work. Similarly, the binder driver does not restore the priority for a 3^{rd} work to a 5^{th} work, so that the binder thread is at the second priority.

Before the binder thread 801 executes a 6^{th} work, the binder driver determines, based on S703 and S704, that the priority of the binder thread needs to be restored. A processing priority of the 6^{th} work in a 1^{st} running time period is the second priority, and the processing priority of the 6^{th} work in a 2^{nd} running time period is the first priority, to implement priority restoration.

Based on the embodiment corresponding to FIG. 7, the following problem may occur. For example, when the binder thread is in a priority elevation period, and the binder thread (for example, a second thread) of the terminal device initiates another binder call (for example, initiates a third thread), the binder driver inserts a work corresponding to the another binder call into a queue of a thread (for example, the second thread) in which a client is located, so that the binder thread restores the processing priority of the binder thread when processing the work corresponding to the another binder call. In this scenario, this may lead to the binder thread being in the runnable state.

Generally, in the embodiment corresponding to FIG. 7, when a thread initiates a binder asynchronous call, the binder driver places a current work in a work in which the binder asynchronous call is located, and inserts, into a work queue of a client thread, a work indicating completion of a communication transaction, to notify the client thread of the binder asynchronous call.

It may be understood that each process may include a plurality of binder threads. The binder thread is used to communicate with a binder thread in another process, and the binder thread is managed uniformly in the binder driver. A queue corresponding to any binder thread may include a work that the binder thread needs to complete.

However, when the binder thread (for example, the second thread) is in a priority elevation period and initiates another binder call (for example, initiates a third thread), the binder driver inserts, into a queue in which the binder thread (for example, the second thread) is located, a work indicating completion of a communication transaction, and the binder driver restores the processing priority of the binder thread (for example, the second thread) based on the work indicating completion of the communication transaction. This leads to the binder thread being in the runnable state.

When the binder thread (for example, the second thread) is in a priority elevation period and initiates a synchronous binder call (for example, initiates a fourth thread), the binder thread receives a binder reply work after a work ends, the binder driver inserts the binder reply work into a queue in which the binder thread is located, and the binder driver restores the processing priority of the binder thread based on the binder reply work. This leads to the binder thread being in the runnable state.

That the binder thread is in a priority elevation period may be understood as a period from a start of executing the 1^{st} work to a start of executing the 2^{nd} work by the binder thread.

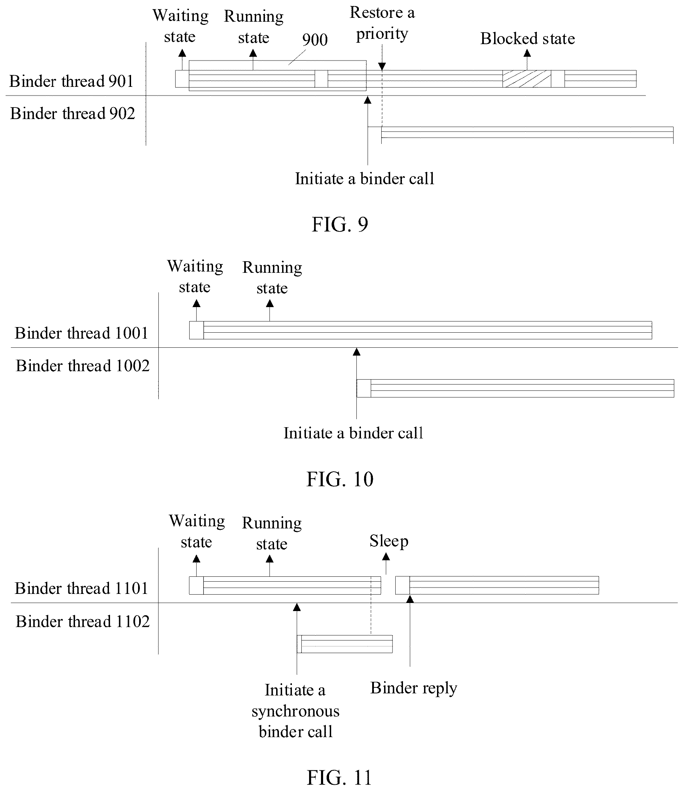

For example, FIG. 9 is still another diagram of viewing a thread status from a trace tool according to an embodiment of this application. As shown in FIG. 9, a binder 901 may be in a priority-elevated state in a solid-line frame 900. In this case, a processing priority of the binder 901 may be 97.

In a process in which the binder 901 has its priority elevated, when the binder 901 initiates a binder 902 call, the binder driver inserts a work into a binder 902, and inserts, into the binder 901, a work indicating completion of a communication transaction. The binder driver restores the priority of the binder 901 in advance based on the work that indicates completion of the communication transaction and that is in the binder 901, for example, restores the processing priority of the binder 901 to 120. Further, the binder 901 executes the work indicating completion of the communication transaction. It may be understood that the processing priority of the binder 901 in a subsequent running process may be 120, and the binder 901 may be blocked after the priority is restored. The higher a value of the priority is, the lower a priority level for processing is, and the later a processing time is.

In view of this, an embodiment of this application provides a thread scheduling method. When a work is executed, a binder driver determines a processing priority of a binder call based on S703 and S704 and filters out a preset work that causes a priority of a binder thread to be restored in advance.

The preset work may include a first work type and a second work type. For example, the first work type may include a work type indicating that a communication transaction is completed and handed over to an initiator for processing, a work type indicating that a communication transaction fails and is handed over to the initiator for processing, and the like. The second work type may include a work type indicating a reply from a server.

The work indicating that the communication transaction is completed and handed over to the initiator for processing may include BINDER_WORK_ TRANSACTION_COMPLETE and BINDER_WORK_TRANSACTION_ONEWAY_SPAM_ SUSPECT, the work type indicating that the communication transaction fails and is handed over to the initiator for processing may include BINDER_WORK_RETURN_ERROR, and the work type indicating the reply from the server may include a binder reply work. This is not limited in embodiments of this application.

For example, when it is determined, based on S703 and S704, that the priority of the binder thread does not need to be elevated (or may be understood as the processing priority of the binder driver can be restored), and a work executed by the binder thread meets the preset work, the binder driver may not restore the processing priority of the binder thread, so that the processing priority of the binder thread is at a second priority. This reduces a problem that the priority is restored in advance when the binder thread is in a priority elevation period.

When another binder call is initiated for the binder thread, the binder driver inserts, into a queue in which the binder thread is located, a work indicating completion of a communication transaction. This causes a problem that the binder thread is in a runnable state in the priority elevation period. The preset work is filtered out, so that the binder thread is in a running state. For details, refer to an embodiment corresponding to FIG. 10.

For example, FIG. 10 is yet another diagram of viewing a thread status from a trace tool according to an embodiment of this application. As shown in FIG. 10, in a process in which a binder 1001 has its priority elevated, when the binder 1001 initiates a binder 1002 call, the binder driver inserts a work into a binder 1002, and inserts, into the binder 1001, a work indicating completion of a communication transaction. When the binder driver determines that a priority does not need to be elevated currently and detects that the work indicating completion of the communication transaction meets the preset work, the binder driver does not restore the processing priority of the binder 1001, so that a subsequent processing priority of the binder 1001 is 97, and the binder 1001 is always in a running state.

When another synchronous binder call is initiated for the binder thread, the binder thread receives a binder reply work. This causes a problem that the binder thread is in a runnable state in the priority elevation period. The preset work is filtered out, so that the binder thread is in a running state. For details, refer to an embodiment corresponding to FIG. 11.

For example, FIG. 11 is still yet another diagram of viewing a thread status from a trace tool according to an embodiment of this application. As shown in FIG. 11, in a process in which a binder 1101 has its priority elevated, when the binder 1001 initiates a synchronous binder 1102 call, the binder driver inserts a work into a binder 1102, and returns a binder reply work to the binder 1101 after the binder 1102 processes a work. When the binder driver determines that a priority does not need to be elevated currently and detects that the binder reply work meets the preset work, the binder driver does not restore the processing priority of the binder 1101, so that a subsequent processing priority of the binder 1101 is 97, and the binder 1101 is always in a running state.

On the basis of the embodiment corresponding to FIG. 7, the following problems may occur. For example, when a terminal device simultaneously executes an asynchronous binder call and a synchronous binder call, a conflict between the asynchronous binder call and the synchronous binder call causes a picture freezing issue.

For an execution process of the asynchronous binder call, refer to the embodiment corresponding to FIG. 7. In a synchronous binder call process, when determining that a surface flinger is a preset important thread, the framework layer may transfer a processing priority of the important thread to the processing priority of the binder thread on the server in the binder driver; and when determining that the binder thread replies, the binder driver may restore the processing priority of the binder thread.

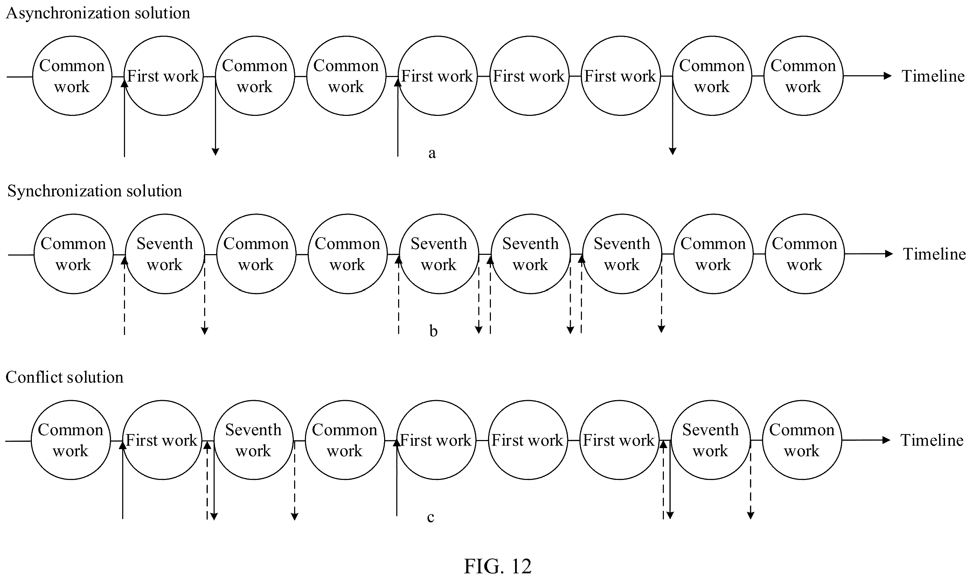

For example, FIG. 12 is a diagram of a scenario in which a synchronous call conflicts with an asynchronous call according to an embodiment of this application.
a shown in FIG. 12 is a solution for elevating a priority based on the asynchronous binder call (or referred to as an asynchronization solution). When the binder driver detects a first work, the processing priority of the binder thread can be elevated (refer to a solid arrow indicating upward); and when a next normal work is executed, the priority can be restored (refer to a solid arrow indicating downward).

It can be learned that, in the asynchronization solution, after any first work is executed, the priority is not immediately restored, but the priority is restored before a common work is executed. The first work may be understood as a work in the binder thread that is described in S701 and that meets the preset condition.

b shown in FIG. 12 is a solution for elevating a priority based on the synchronous binder call (or referred to as a synchronization solution). When the binder driver detects a seventh work, the processing priority of the binder thread can be elevated (refer to a dashed arrow indicating upward); and when a next normal work is executed, the priority can be restored (refer to a dashed arrow indicating downward).

It can be learned that, in the synchronization solution, the priority is restored immediately after any seventh work is executed. The seventh work may be a work in an important thread preset in the synchronous binder call.

c shown in FIG. 12 is a solution for elevating a priority based on the synchronous binder call and the asynchronous binder call (or referred to as a conflict solution). The binder driver may execute a first work and then a seventh work.

A process of identifying the conflict solution may be as follows: Before the first work is executed, the processing priority of the binder thread is elevated and a label indicating that the asynchronization solution is being effective is marked for the binder thread, and the priority does not need to be restored in the asynchronization solution; and further, before the seventh work is executed, when the binder driver identifies that the binder thread carries a label, the binder driver may determine that a conflict occurs with the synchronization solution in an effective period of the asynchronization solution.

Therefore, before the seventh work is executed, the binder driver may restore a processing priority of the asynchronous call, and then elevate a processing priority of the synchronous call. It may be understood that, in a period of time after the binder driver elevates the processing priority of the synchronous call of the binder thread, the binder thread follows a synchronous binder call solution.

With reference to the description in the embodiment corresponding to FIG. 12, it may be understood that, when the binder driver first detects the first work and then detects the seventh work, a conflict occurs; and when the binder driver first detects the seventh work and then detects the first work, no conflict occurs.

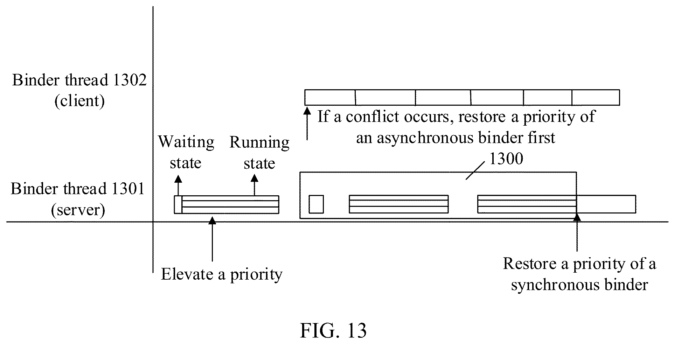

For example, FIG. 13 is a further diagram of viewing a thread status from a trace tool according to an embodiment of this application.

As shown in FIG. 13, a binder 1302 may be a client thread, a binder thread 1301 may be a server thread, and the binder thread 1302 may be a synchronous binder call.

When being in a running state for the first time, the binder thread 1301 may elevate a priority of the binder asynchronous call. When a work identified by the synchronous binder call is detected, it is determined that a conflict occurs. In other words, the binder driver may first restore the processing priority of the asynchronous binder call, then elevate a processing priority of the synchronous binder call in a solid-line frame 1300, and further restore the priority of the synchronous binder call.

It may be understood that the thread scheduling method provided in embodiments of this application may be applied to an image drawing scenario. For example, a first thread is a thread used for image synthesis, and a first process is a process used for image drawing. Alternatively, the thread scheduling method provided in embodiments of this application may be applied to a window information update scenario. For example, a first process is a process used to generate window data of window information, and a first thread is a thread used to update window information of a system.

With reference to the descriptions in the embodiments corresponding to FIG. 3 to FIG. 13, FIG. 14 is a diagram 1 of an architecture of a thread scheduling method based on a terminal device according to an embodiment of this application.

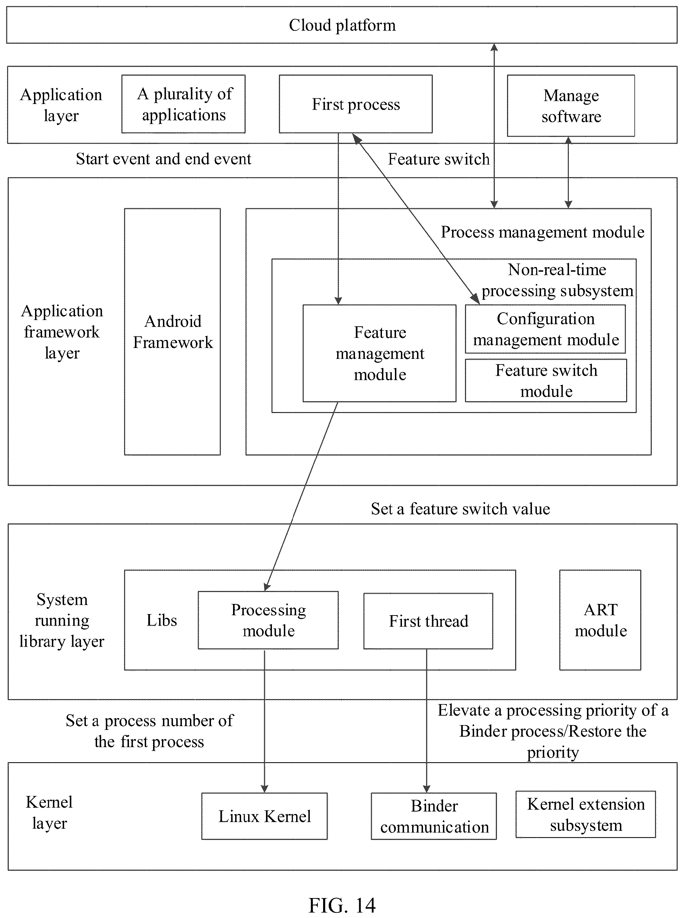

As shown in FIG. 14, the terminal device has a kernel (Kenrel) layer, a hardware abstraction layer (hardware abstraction layer, HAL), a system running library layer (native), an application framework (Framework) layer, and an application layer. The hardware abstraction layer is not shown in FIG. 14. The application layer exchanges information with a cloud platform.

The application layer includes a plurality of applications (APPs). A first process is run at the application layer, and management software is run at the application layer. For example, the first process may be a Launcher process.

The application framework layer includes an application framework of a system. For example, this solution is applied to an Android system, and an application framework of the system is an Android Framework. The application framework layer includes a process management module, and the process management module includes a non-real-time processing subsystem. The non-real-time processing subsystem includes a feature management module, a configuration management module, and a feature switch module.

The application layer interacts with the application framework layer to transmit a start event (Start event), an end event (End event), and a feature switch.

The system running library layer includes Libs and an ART module. Libs includes a processing module, and a first thread (a surfaceflinger thread) is run in Libs.

The application framework layer interacts with the system running library layer to set a feature switch value. The first process supports asynchronous biander communication. Therefore, the application framework layer can transfer the feature switch value to the system running library layer.

The kernel layer includes a Linux kernel (Linux Kernel) and a kernel extension subsystem. The kernel layer further performs binder communication.

The system running library layer interacts with the kernel layer to set the feature switch value. Therefore, the system running library layer can transfer the feature switch value to the kernel layer.

In addition, the kernel layer of a processor obtains encapsulation data transferred by the application framework (Framework) layer or the system running library layer (native). The encapsulation data includes a binder communication number, an interface descriptor, and an asynchronous communication identifier.

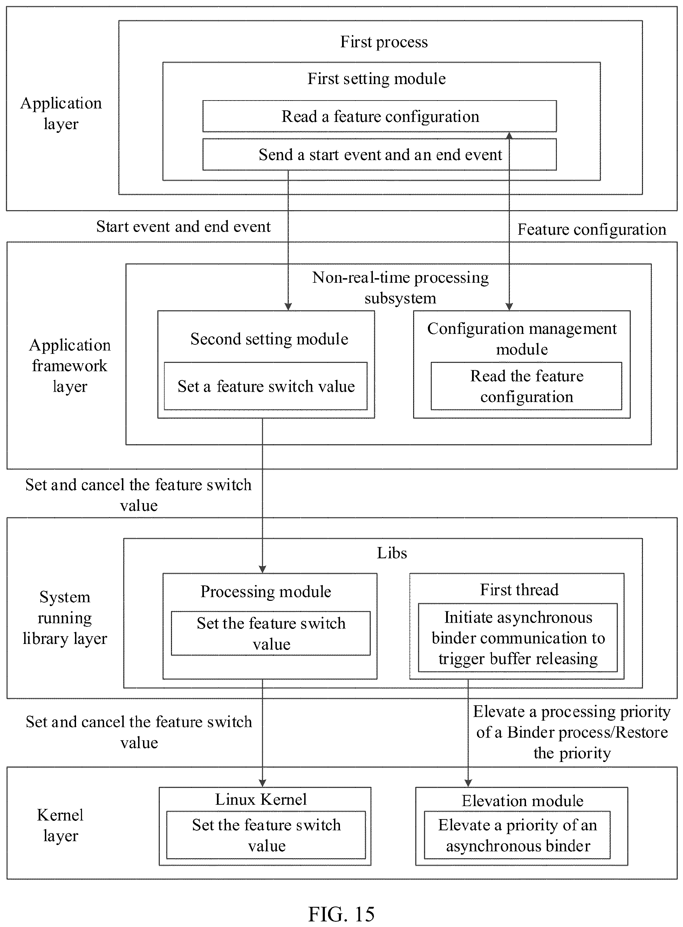

FIG. 15 is a diagram 2 of an architecture of a thread scheduling method based on a terminal device according to an embodiment of this application. As shown in FIG. 15, the terminal device has a kernel (Kenrel) layer, a hardware abstraction layer (hardware abstraction layer, HAL), a system running library layer (native), an application framework (Framework) layer, and an application layer. The hardware abstraction layer is not shown in FIG. 15. The application layer exchanges information with a cloud platform.

The application layer includes a plurality of applications (APPs). A first process is run at the application layer, and management software is run at the application layer. For example, the first process is a Launcher process.

The first process includes a first setting module, and the first setting module is configured to read a feature configuration (that is, read a feature switch), and is configured to send a start event and an end event. It may be learned that the first setting module is configured to read switch-on information and switch-off information. The switch-on information and the switch-off information are stored in a configuration management module at the application framework layer. The feature configuration is the switch-on information or the switch-off information. The switch-on information indicates to start priority change on a second thread. The switch-off information indicates to end priority change on the second thread. The start event (namely, a first event) represents a start of priority change on the second thread. The end event (namely, a second event) represents an end of priority change on the second thread.

The first process sends the start event (namely, the first event) to the application framework layer based on read start information. The first process sends the end event (namely, the second event) to the application framework layer based on read end information.

The application layer interacts with the application framework layer to transmit the start event (Start event), the end event (End event), and the feature switch.

The application framework layer includes an application framework of a system. For example, this solution is applied to an Android system, and an application framework of the system is an Android Framework. The application framework layer includes a process management module, and the process management module includes a non-real-time processing subsystem. The non-real-time processing subsystem includes a second setting module and the configuration management module.

The second setting module is configured to obtain a feature switch value. The first process supports asynchronous biander communication. The configuration management module is configured to store and read the feature configuration (that is, store and read the feature switch).

The application framework layer transfers the feature switch value to the system running library layer.

The system running library layer includes Libs and an ART module. Libs includes a processing module, and a first thread (a surfaceflinger thread) is run in Libs.

The processing module is configured to obtain the feature switch value. The first thread is used to initiate asynchronous binder communication, to trigger a second thread (a binder thread) to release a buffer (buffer) area. For example, the first thread is a surfaceflinger thread.

The system running library layer transfers the feature switch value to the kernel layer. In addition, the first thread at the system running library layer initiates asynchronous binder communication, and elevates a processing priority of the second thread (the binder thread).

The kernel layer includes a Linux kernel (Linux Kernel) and an elevation module. The Linux kernel is configured to store a process number of the Launcher process. The elevation module is configured to elevate the processing priority of the second thread (the binder thread).

The method provided in embodiments of this application is described above with reference to FIG. 3 to FIG. 15. An apparatus for performing the method in embodiments of this application is described below.

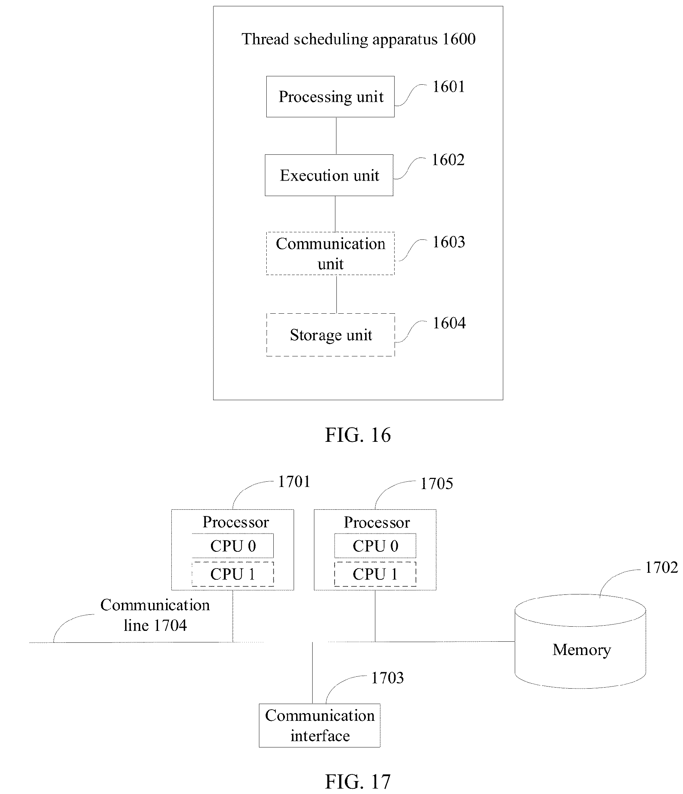

For example, FIG. 16 is a diagram of a structure of a thread scheduling apparatus according to an embodiment of this application. The thread scheduling apparatus may be a router in embodiments of this application, or may be a chip or a chip system in the router.

As shown in FIG. 16, the thread scheduling apparatus 1600 may be used in a communication device, a circuit, a hardware component, or a chip, and the thread scheduling apparatus includes a processing unit 1601 and an execution unit 1602. The processing unit 1601 is configured to support the thread scheduling apparatus 1600 in performing an information processing step, and the execution unit 1602 is configured to support the thread scheduling apparatus 1600 in performing a work execution step.

In a possible embodiment, the thread scheduling apparatus may further include a communication unit 1603. The communication unit 1603 is configured to support the thread scheduling apparatus 1600 in performing data sending and data receiving steps. The communication unit 1603 may be an input/output interface, a pin, a circuit, or the like.

In a possible embodiment, the thread scheduling apparatus may further include a storage unit 1604. The processing unit 1601 and the storage unit 1604 are connected to each other through a line. The storage unit 1604 may include one or more memories, and the memory may be a component that is in one or more devices or circuits and that is configured to store a program or data. The storage unit 1604 may exist independently, and is connected to the processing unit 1601 included in the thread scheduling apparatus through a communication line. Alternatively, the storage unit 1604 may be integrated together with the processing unit 1601.

The storage unit 1604 may store computer-executable instructions for the method in the router, so that the processing unit 1601 performs the method in the foregoing embodiments. The storage unit 1604 may be a register, a cache, a RAM, or the like, and the storage unit 1604 may be integrated together with the processing unit 1601. The storage unit 1604 may be a read-only memory (read-only memory, ROM) or another type of static storage device that may store static information and instructions. The storage unit 1604 may be independent of the processing unit 1601.

FIG. 17 is a diagram of another hardware structure of a terminal device according to an embodiment of this application. As shown in FIG. 17, the terminal device includes a processor 1701, a communication line 1704, and at least one communication interface (for example, a communication interface 1703 is used as an example for description in FIG. 17).

The processor 1701 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1704 may include a circuit for transferring information between the foregoing components.

The communication interface 1703 is configured to communicate with another terminal device or a communication network such as an Ethernet or a wireless local area network (wireless local area networks, WLAN) by using an apparatus such as a transceiver.

Possibly, the terminal device may further include a memory 1702.

The memory 1702 may be a read-only memory (read-only memory, ROM), another type of static storage terminal device that can store static information and instructions, a random access memory (random access memory, RAM), or another type of dynamic storage terminal device that can store information and instructions, or may be an electrically erasable programmable read-only memory (electrically erasable programmable read-only memory, EEPROM), a compact disc read-only memory (compact disc read-only memory, CD-ROM) or another compact disc memory, an optical disc storage (including a compressed optical disc, a laser disc, an optical disc, a digital versatile optical disc, and a Blu-ray disc), a magnetic disk storage media, or another magnetic storage terminal device, or any another medium that can be used to carry or store expected program code in a form of an instruction or a data structure and that can be accessed by a computer, but not limited thereto. The memory may exist independently, and is connected to the processor through the communication line 1704. The memory may alternatively be integrated with the processor.

The memory 1702 is configured to store computer-executable instructions for executing the solutions of this application, and the processor 1701 controls the execution. The processor 1701 is configured to execute the computer-executable instructions stored in the memory 1702, to implement the method provided in embodiments of this application.

Possibly, the computer-executable instructions in embodiments of this application may also be referred to as application code. This is not specifically limited in embodiments of this application.

During specific implementation, in an embodiment, the processor 1701 may include one or more CPUs, for example, a CPU 0 and a CPU 1 in FIG. 17.

During specific implementation, in an embodiment, the terminal device may include a plurality of processors, for example, the processor 1701 and a processor 1705 in FIG. 17. Each of these processors may be a single-core (single-CPU) processor, or may be a multi-core (multi-CPU) processor. The processor herein may be one or more terminal devices, circuits, and/or processing cores configured to process data (for example, computer program instructions).

A computer program product includes one or more computer instructions. When the computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer or a data storage device, such as a server or a data center, including one or more usable media. For example, the usable medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a computer-readable storage medium. The method described in the foregoing embodiments may be fully or partially implemented by software, hardware, firmware, or any combination thereof. The computer-readable medium may include a computer storage medium and a communication medium, and may further include any medium that can transfer a computer program from one place to another. The storage medium may be any target medium accessible to a computer.

In a possible design, the computer-readable medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer-readable medium. For example, if software is transmitted from a website, a server, or another remote source by using a coaxial cable, an optical fiber cable, a twisted pair, a DSL, or a wireless technology (such as infrared, radio, or microwave), the coaxial cable, the optical fiber cable, the twisted pair, the DSL, or the wireless technology such as infrared, radio, or microwave is included in a definition of the medium. The magnetic disk and the optical disc used in this specification include an optical disc (CD), a laser disc, an optical disc, a digital versatile disc (digital versatile disc, DVD), a floppy disk, and a Blu-ray disc. The magnetic disk generally reproduces data in a magnetic manner, and the optical disc reproduces data optically by using laser.

The foregoing combinations also need to be included within the scope of the computer-readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A thread scheduling method, applied to a terminal device, wherein a first process and a first thread are run in the terminal device, the first thread is a thread used to process a work, the first process comprises a second thread, the second thread is a binder thread, and the second thread comprises a first work; and the method comprises:
at a first moment, in response to a first instruction, changing, by the terminal device based on the first instruction, a processing priority of the second thread from a first priority to a second priority before executing the first work, wherein a processing priority of the second priority is higher than a processing priority of the first priority, the second thread carries a first identifier after the first moment, the first identifier indicates that the second thread is in a priority-elevated state, and the first instruction is an instruction corresponding to the first work;
executing, by the terminal device, the first work based on the second thread having the second priority; and
at a second moment, when the terminal device determines that there is no to-be-executed work in the second thread, and the second thread carries the first identifier, skipping restoring, by the terminal device, the processing priority of the second thread.

2. The method according to claim 1, wherein the second thread further comprises a second work; and after the second moment, the method further comprises:
at a third moment, in response to a second instruction, when the terminal device determines, based on the second instruction, to change the processing priority of the second thread from the first priority to the second priority, and the terminal device is at the second priority after the second moment, skipping restoring, by the terminal device, the processing priority of the second thread, and executing the second work based on the second thread having the second priority, wherein the second instruction is an instruction corresponding to the second work; or
when the terminal device determines, based on the second instruction, not to change the processing priority of the second thread from the first priority to the second priority, and the terminal device is at the second priority after the second moment, restoring, by the terminal device, the second priority to the first priority, and executing the second work based on the second thread having the first priority.

3. The method according to claim 2, wherein the second instruction comprises one or more of the following: a binder communication number, an interface descriptor, or an asynchronous communication identifier, wherein the binder communication number indicates a communication interface, the interface descriptor indicates a client and a server that perform communication, and the asynchronous communication identifier indicates a communication mode; and that the terminal device determines, based on the second instruction, to change the processing priority of the second thread from the first priority to the second priority comprises:
when the second thread is determined based on the second instruction and the second thread meets a preset condition, changing, by the terminal device, the processing priority of the second thread from the first priority to the second priority, wherein
the preset condition comprises one or more of the following: the communication interface indicated by the binder communication number is a communication interface between the first thread and the second thread, the client that is indicated by the interface descriptor and that performs communication is the first thread and the server that is indicated by the interface descriptor and that performs communication is the second thread, or the asynchronous communication identifier indicates that the first thread and the second thread are in asynchronous binder communication.

4. The method according to claim 2, wherein a third thread is run in the terminal device after the first moment and before the third moment, the third thread is a thread of a binder call initiated by the second thread, and the third thread comprises a fourth work; and the method further comprises:
inserting, by the terminal device, a third work into an execution queue of the second thread based on the third thread;
in response to a third instruction, when the terminal device determines, based on the third instruction, to restore the processing priority of the second thread, and the third work meets a preset first work type, skipping restoring, by the terminal device, the processing priority of the second thread, wherein the third instruction is an instruction corresponding to the third work;
executing, by the terminal device, the third work based on the second thread having the second priority; and
executing, by the terminal device, the fourth work.

5. The method according to claim 4, wherein the first work type comprises a work type indicating that a communication transaction is completed and handed over to an initiator for processing, and/or a work type indicating that a communication transaction fails and is handed over to the initiator for processing.

6. The method according to any one of claims 2 to 5, wherein a fourth thread is run in the terminal device after the first moment and before the third moment, the fourth thread is a thread of a synchronous binder call initiated by the second thread, and the fourth thread comprises a fifth work; and the method further comprises:
inserting, by the terminal device, a sixth work into the second thread after executing the fifth work, wherein the sixth work indicates that the terminal device completes processing the fifth work;
in response to a fourth instruction, when the terminal device determines, based on the fourth instruction, to restore the processing priority of the second thread, and the sixth work meets a preset second work type, skipping restoring, by the terminal device, the processing priority of the second thread, wherein the fourth instruction is an instruction corresponding to the sixth work;
executing, by the terminal device, the sixth work based on the second thread having the second priority; and
executing, by the terminal device, the fifth work.

7. The method according to claim 6, wherein the second work type comprises a work type replied by the server.

8. The method according to any one of claims 1 to 7, wherein the first work is a work identified by the terminal device when there is an asynchronous binder call, the second thread further comprises a seventh work, the seventh work is a work identified by the terminal device when there is a synchronous binder call, the second thread carries a second identifier before the second moment, and the second identifier indicates that the second thread is an asynchronous binder call; and before the second moment and after the first moment, the method further comprises:
at a fourth moment, in response to a fifth instruction, when the terminal device detects the seventh work and the second thread that carries the second identifier, restoring, by the terminal device, the processing priority of the second thread before executing the seventh work, wherein the fifth instruction is an instruction corresponding to the seventh work; and
at a fifth moment, changing, by the terminal device, the processing priority of the second thread from the first priority to the second priority, and processing the seventh work based on the second priority, wherein the fifth moment is after the fourth moment, the second thread is in a state of the synchronous binder call in a first time period after the fifth moment, and the second thread is in a state of the asynchronous binder call between the fourth moment and the fifth moment.

9. The method according to claim 8, wherein after the fifth moment, the method further comprises:
at a sixth moment, restoring, by the terminal device, the processing priority of the second thread, wherein the processing priority of the second thread is at the first priority in a second time period after the sixth moment.

10. The method according to any one of claims 1 to 9, wherein the first thread is a thread for image synthesis, and the first process is a process for image drawing; or the first process is a process used to generate window data of window information, and the first thread is a thread used to update window information of a system.

11. A terminal device, comprising a processor and a memory, wherein
the memory is configured to store a computer program; and
the processor is configured to invoke and execute the computer program, to enable the terminal device to perform the method according to any one of claims 1 to 10.

12. A computer-readable storage medium, configured to store a computer program, wherein when the computer program is run on a computer, the computer is enabled to perform the method according to any one of claims 1 to 10.
